# EUROPEAN PATENT SPECIFICATION

(11) **EP 4 331 781 B1**
(45) Date of publication and mention of the grant of the patent: **23.07.2025**
(21) Application number: 22861643.9
(22) Date of filing: 19.08.2022
(51) Int. Cl.: B25J 11/00, B25J 19/02, G10L 15/22, G10L 15/04, G06V 40/20, G06F 3/16, G06F 18/22, G06V 10/82, G06V 20/58, G06V 40/10, G05D 1/2285, G10L 13/00, G05D 105/30, G05D 107/60, G05D 109/10

(54) **ROBOT AND CONTROL METHOD THEREFOR**
ROBOTER UND STEUERUNGSVERFAHREN DAFÜR
ROBOT ET PROCÉDÉ DE COMMANDE ASSOCIÉ

(30) Priority: 25.08.2021 KR 20210112646
(43) Date of publication of application: 06.03.2024
(60) Divisional application: 25180208.8
(73) Proprietor: Samsung Electronics Co., Ltd., Suwon-si, Gyeonggi-do 16677 (KR)
(72) Inventor: KIM, Kihoon, Suwon-si, Gyeonggi-do 16677 (KR); KUK, Junggap, Suwon-si, Gyeonggi-do 16677 (KR); LEE, Sangkyung, Suwon-si, Gyeonggi-do 16677 (KR)
(74) Representative: Gulde & Partner
(86) International application number: PCT/KR2022/012422
(87) International publication number: WO 2023/027433

(56) References cited:
- JP-A- 2004 034 273
- JP-A- 2008 168 375
- JP-A- 2009 233 764
- JP-A- 2014 504 959
- KR-A- 20140 114 700
- KR-A- 20180 048 039
- ISHI CARLOS T ET AL: "Online processing for speech-driven gesture motion generation in android robots", 2019 IEEE-RAS 19TH INTERNATIONAL CONFERENCE ON HUMANOID ROBOTS (HUMANOIDS), IEEE, 15 October 2019 (2019-10-15), pages 484 - 490, XP033740823, DOI: 10.1109/HUMANOIDS43949.2019.9035066
- TAKANO W ET AL: "Statistically integrated semiotics that enables mutual inference between linguistic and behavioral symbols for humanoid robots", 2009 IEEE INTERNATIONAL CONFERENCE ON ROBOTICS AND AUTOMATION : (ICRA) ; KOBE, JAPAN, 12 - 17 MAY 2009, IEEE, PISCATAWAY, NJ, USA, 12 May 2009 (2009-05-12), pages 646 - 652, XP031483460, ISBN: 978-1-4244-2788-8
- SUMI KEISUKE ET AL: "Proposal of communication robot with simple motions", 2017 IEEE INTERNATIONAL CONFERENCE ON INDUSTRIAL TECHNOLOGY (ICIT), IEEE, 22 March 2017 (2017-03-22), pages 1466 - 1471, XP033091306, DOI: 10.1109/ICIT.2017.7915582

## Description

### [TECHNICAL FIELD]

The disclosure relates to a robot and a method for controlling thereof. More particularly, the disclosure relates to a robot capable of performing a motion while uttering and a method for controlling thereof.

### [BACKGROUND ART]

Along with development of electronic technologies, various service robots are being used. For example, service robots that explain works of art in a gallery or explain products in a store are being used.

An exemplary robot is disclosed in JP 2004-34273 A.

Meanwhile, a service robot of the related art extracted a keyword from a sentence to be uttered and obtained a motion corresponding to the extracted keyword. In this case, if a similar keyword is extracted from a following sentence, the robot performs similar motions consecutively. If the robot performs the similar or same motion consecutively, a user may feel that the robot is malfunctioning or the motion of the robot is not natural.

Therefore, a need exists for a technology for a robot not to perform the same motion consecutively and to perform a motion more naturally.

### [DISCLOSURE]

### [Technical Problem]

Aspects of the disclosure are to address at least the above-mentioned problems and/or disadvantages and to provide at least the advantages described below. Accordingly, an aspect of the disclosure is to provide a robot for obtaining a motion different from a motion performed in a time section adjacent to a current time section as a motion corresponding to a sentence to be uttered in the current time section.

Additional aspects will be set forth in part in the description which follows and, in part, will be apparent from the description, or may be learned by practice of the presented embodiments.

### [Technical Solution]

In accordance with an aspect of the disclosure, a robot is provided. The robot includes a camera, a speaker, a driving unit, a memory storing at least one instruction, and a processor, in which the processor is configured to detect a user based on an image obtained through the camera, obtain a plurality of sentences to be uttered by the robot to the user, identify a first sentence to which a motion to be performed while the robot utters is not allocated among the plurality of sentences, identify a second sentence to be uttered in a second time section adjacent to a first time section in which the first sentence is to be uttered, identify a first motion different from a second motion allocated to the second sentence among a plurality of motions pre-stored in the memory as a motion corresponding to the first sentence, and control the speaker to output a voice corresponding to the first sentence and control the driving unit to perform the first motion while the voice is output.

The processor may be configured to identify one or more motions having a similarity to the second motion less than a predetermined value among the plurality of pre-stored motions, and identify one of the one or more motions randomly and obtain the motion as the first motion.

The processor may be configured to obtain similarities between the plurality of pre-stored motions and the second motion by comparing histograms corresponding to the plurality of pre-stored motions and a histogram corresponding to the second motion.

The memory may store a similarity table including similarities between the plurality of pre-stored motions including the second motion, and the processor may be configured to obtain the first motion based on the similarity table.

The processor may be configured to identify a third motion allocated to a third sentence to be uttered in a third time section that is adjacent to the first time section and different from the second time section, obtain first similarities between the plurality of pre-stored motions and the second motion and obtain second similarities between the plurality of pre-stored motions and the third motion, obtain a plurality of average values of the first similarities and the second similarities corresponding to the plurality of pre-stored motions, identify one or more average values less than a predetermined value among the plurality of average values and identify one or more motions corresponding to the one or more average values among the plurality of pre-stored motions, and identify one of the one or more motions randomly and obtain the motion as the first motion.

The processor may be configured to obtain a size of the second motion based on information on the second motion, based on a ratio of a size of the first motion to the size of the second motion being greater than a threshold value, adjust the size of the first motion based on the size of the first motion and the size of the second motion, and based on the ratio of the size of the first motion to the size of the second motion being less or equal to the threshold value, maintain the size of the first motion.

The processor may be configured to calculate a weight based on the ratio of the size of the first motion to the size of the second motion, and adjust the size of the first motion based on the weight so that the size of the first motion is less than the size of the second motion.

In accordance with another aspect of the disclosure, a method for controlling a robot is provided. The method includes detecting a user, obtaining a plurality of sentences to be uttered by the robot to the detected user, identifying a first sentence to which a motion to be performed while the robot utters is not allocated among the plurality of sentences, identifying a second sentence to be uttered in a second time section adjacent to a first time section in which the first sentence is to be uttered, identifying a first motion different from a second motion allocated to the second sentence among a plurality of pre-stored motions as a motion corresponding to the first sentence, and performing the first motion while uttering the first sentence.

The obtaining of the first motion may include identifying one or more motions having a similarity to the second motion less than a predetermined value among the plurality of pre-stored motions, and identifying one of the one or more motions randomly and obtaining the motion as the first motion.

The identifying of the one or more motions may include obtaining similarities between the plurality of pre-stored motions and the second motion by comparing histograms corresponding to the plurality of pre-stored motions and a histogram corresponding to the second motion.

The robot may store a similarity table including similarities between the plurality of pre-stored motions including the second motion, and the obtaining the first motion may include obtaining the first motion based on the similarity table.

The obtaining of the first motion may include identifying a third motion allocated to a third sentence to be uttered in a third time section that is adjacent to the first time section and different from the second time section, obtaining first similarities between the plurality of pre-stored motions and the second motion and obtaining second similarities between the plurality of pre-stored motions and the third motion, obtaining a plurality of average values of the first similarities and the second similarities corresponding to the plurality of pre-stored motions, identifying one or more average values less than a predetermined value among the plurality of average values and identifying one or more motions corresponding to the one or more average values among the plurality of pre-stored motions, and identifying one of the one or more motions randomly and obtaining the motion as the first motion.

The control method may further include obtaining a size of the second motion based on information on the second motion, based on a ratio of a size of the first motion to the size of the second motion being greater than a threshold value, adjusting the size of the first motion based on the size of the first motion and the size of the second motion, and based on the ratio of the size of the first motion to the size of the second motion being less or equal to the threshold value, maintaining the size of the first motion.

The adjusting of the size of the first motion may include calculating a weight based on the ratio of the size of the first motion to the size of the second motion, and adjusting the size of the first motion based on the weight so that the size of the first motion is less than the size of the second motion.

With respect to the above-described method for controlling a robot, in accordance with another aspect of the disclosure, at least one non-transitory computer-readable recording medium is provided on which a program for executing this method on a computer is recorded.

The solution of the disclosure is not limited to the above solutions and solutions not mentioned above may be clearly understood by those skilled in the art of the disclosure from this specification and accompanying drawings.

### [Effect of Invention]

According to various embodiments of the disclosure, the robot may perform the various motions naturally. Therefore, the feeling of satisfaction of the user may be enhanced.

In addition, effects predicted to be exhibited by the aspects of the disclosure will be described directly or implicitly in the description of embodiments of the disclosure. For example, various effects predicted according to the embodiments of the disclosure will be described in the description which will be described later.

Other aspects, advantages, and salient features of the disclosure will become apparent to those skilled in the art from the following detailed description, which, taken in conjunction with the annexed drawings, discloses various embodiments of the disclosure.

### [DESCRIPTION OF DRAWINGS]

The above and other aspects, features, and advantages of certain embodiments of the disclosure will be more apparent from the following description taken in conjunction with the accompanying drawings, in which:
FIG. 1 is a diagram illustrating an operation of a robot according to an embodiment of the disclosure;
FIG. 2 is a block diagram illustrating a configuration of a robot according to an embodiment of the disclosure;
FIG. 3 is a diagram illustrating a method for obtaining a motion according to an embodiment of the disclosure;
FIG. 4 is a diagram illustrating a method for obtaining a motion according to an embodiment of the disclosure;
FIG. 5 is a diagram illustrating a method for determining similarity between motions according to an embodiment of the disclosure;
FIG. 6 is a diagram illustrating a method for controlling a motion size according to an embodiment of the disclosure;
FIG. 7 is a flowchart illustrating a method for controlling a robot according to an embodiment of the disclosure; and
FIG. 8 is a flowchart illustrating a method for controlling a robot according to an embodiment of the disclosure.

### [DETAILED DESCRIPTION OF EXEMPLARY EMBODIMENTS]

The following description with reference to the accompanying drawings is provided to assist in a comprehensive understanding of various embodiments of the disclosure as defined by the claims. It includes various specific details to assist in that understanding but these are to be regarded as merely exemplary. Accordingly, those of ordinary skill in the art will recognize that various changes and modifications of the various embodiments described herein can be made without departing from the scope of the disclosure. In addition, descriptions of well-known functions and constructions may be omitted for clarity and conciseness.

The terms and words used in the following description are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims.

It is to be understood that the singular forms "a," "an," and "the" include plural referents unless the context clearly dictates otherwise. Thus, for example, reference to "a component surface" includes reference to one or more of such surfaces.

The terms "first," "second," or the like may be used for describing various elements but the elements may not be limited by the terms. The terms are used only to distinguish one element from another.

It is to be understood that the terms, such as "comprise" or "consist of" are used herein to designate a presence of characteristic, number, step, operation, element, part, or a combination thereof, and not to preclude a presence or a possibility of adding one or more of other characteristics, numbers, steps, operations, elements, parts or a combination thereof.

Hereinafter, with reference to the accompanying drawings, embodiments of the disclosure will be described for those skilled in the art to easily practice the embodiments. But, the disclosure may be implemented in various different forms and is not limited to the embodiments described herein. In addition, in the drawings, the parts not relating to the description are omitted for clearly describing the disclosure, and the same reference numerals are used for the same parts throughout the specification.

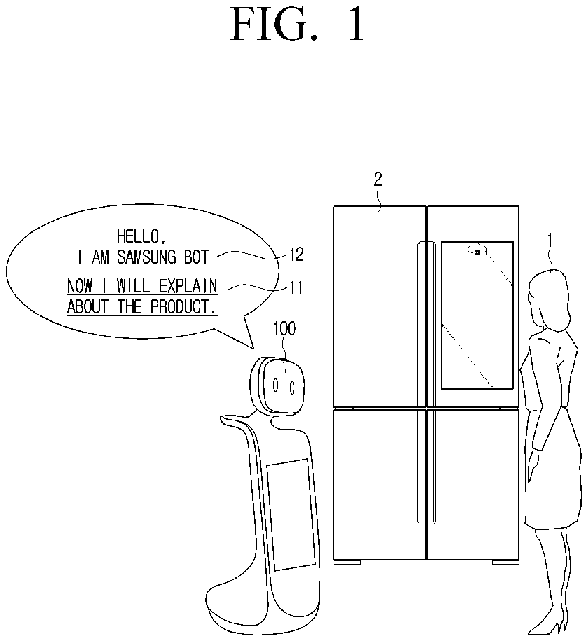

FIG. 1 is a diagram illustrating an operation of a robot according to an embodiment of the disclosure.

Referring to FIG. 1, a robot 100 may utter a plurality of sentences to a user 1. For example, the robot 100 may utter a first sentence 11 for explaining a product 2 and a second sentence 12 for introducing itself.

The robot 100 may perform a motion while uttering the sentences. For example, the robot 100 may perform a motion of shaking a head from side to side while uttering the second sentence 12. Meanwhile, the motion to be performed by the robot 100 may be allocated to at least a part of the sentence to be uttered by the robot 100 in advance. For example, the motion of shaking the head from side to side may be selected by a designer of the robot 100 and allocated to the second sentence 12 in advance.

The sentences to be uttered by the robot 100 may include a sentence to which the motion is not allocated. For example, no motion may be allocated to the first sentence 11. The robot 100 may identify a sentence to which the motion is not allocated and obtain a motion corresponding to the identified sentence. The robot 100 may perform the obtained motion while uttering the identified sentence. For example, the robot 100 may obtain a motion of turning the head towards the product 2 as the motion corresponding to the first sentence 11. The robot 100 may perform the motion of turning the head towards the product 2 while uttering the first sentence 11.

Meanwhile, if a first motion corresponding to the first sentence 11 to be uttered in an adjacent time section and a second motion allocated to the second sentence 12 are the same as each other or similar to each other, the first motion and the second motion may not be clearly distinguished. Accordingly, the user 1 may feel that the robot 100 is malfunctioning or operating unnaturally.

In order to prevent this, the robot 100 may obtain a motion different from the second motion allocated to the second sentence 12 as the first motion corresponding to the first sentence 11. For example, the robot 100 may obtain one or more motions having similarity to the second motion lower than a predetermined value among a plurality of motions stored in advance. The robot 100 may identify one motion randomly from the one or more identified motions and obtain the one identified motion as the first motion.

Since the similarity between the first motion and the second motion is lower than the predetermined value, the first motion and the second motion may be clearly distinguished. Accordingly, the user 1 may feel that the robot 100 operates naturally. In addition, since the first motion is selected randomly, the motion performed by the robot 100 may be different each time the robot utters the first sentence 11. In other words, the motion of the robot 100 may be diverse. Accordingly, the user 1 may feel that the robot 100 operates more naturally, thereby enhancing feeling of satisfaction of the user 1.

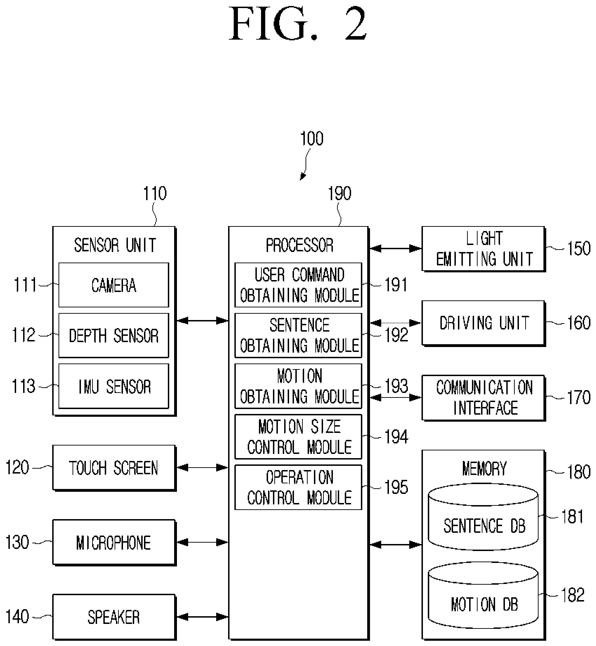

FIG. 2 is a block diagram illustrating a configuration of a robot according to an embodiment of the disclosure.

Referring to FIG. 2, the robot 100 may include a sensor unit 110, a touch screen 120, a microphone 130, a speaker 140, a light emitting unit 150, a driving unit 160, a communication interface 170, a memory 180, and a processor 190. For example, the robot 100 may be a service robot. Meanwhile, the configuration of the robot 100 is not limited to the configuration illustrated in FIG. 2, and the configuration apparent to those skilled in the art may be added.

The sensor unit 110 may include a camera 111, a depth sensor 112, and an inertial measurement unit (IMU) sensor 113. The camera 111 may be an element for obtaining an image of surrounding of the robot 100. The processor 190 may analyze the captured image obtained through the camera 111 to recognize a user. For example, the processor 190 may recognize the user included in the captured image by inputting the captured image to an object recognition model. Herein, the object recognition model may be an artificial neural network model trained to recognize an object included in an image and may be stored in the memory 180. Meanwhile, the camera 111 may include various types of image sensors. For example, the camera 111 may include at least one of a complementary metal oxide semiconductor (CMOS) image sensor and a charge coupled device (CCD) image sensor.

The depth sensor 112 may be an element for detecting an obstacle around the robot 100. The processor 190 may obtain a distance from the robot 100 to the obstacle based on a sensing value of the depth sensor 112. For example, the depth sensor 112 may include a light detection and ranging (LiDAR) sensor. Alternatively the depth sensor 112 may include a radar sensor and a depth camera.

The IMU sensor 113 may be an element for obtaining posture information of the robot 100. The IMU sensor 113 may include a gyro sensor and a geomagnetic sensor.

The touch screen 120 may obtain a touch input of the user and display a response message corresponding to a user command. For example, the touch screen 120 may display a UI element corresponding to a product explanation request. The touch screen 120 may obtain a touch input of the user who touches the UI element. When the touch input of the user is obtained, the touch screen 120 may display a response message including a text for explaining the product.

The microphone 130 may obtain a voice command of the user. The processor 190 may control the operation of the robot 100 based on the voice command of the user obtained through the microphone 130. For example, the microphone 130 may obtain a voice command of the user for requesting for the product explanation ("Please explain the product"). In this case, the processor 190 may control the touch screen 120 to display a text message for explaining the product. Alternatively, the processor 190 may control the speaker 140 to output a voice message for explaining the product.

The speaker 140 may output a voice message. For example, the speaker 140 may output a voice message corresponding to a sentence for introducing the robot 100 ("Hello, I am Samsung Bot").

The light emitting unit 150 may output light for showing face or facial expression of the robot 100. The light emitting unit 150 may include at least one LED module.

The driving unit 160 may be an element for performing various motions of the robot 100. For example, the driving unit 160 may include a wheel for moving the robot 100 and a wheel driving motor for rotating the wheel. Alternatively, the driving unit 160 may include a motor for moving a head, an arm, or a hand of the robot 100. The driving unit 160 may include a motor driving circuit which supplies a driving current to various motors and a rotation detection sensor for detecting a rotation displacement and a rotation speed.

The communication interface 170 may include at least one circuit and communicate with various types of external machines. The communication interface 170 may include at least one of a Bluetooth low energy (BLE) module, a Wi-Fi communication module, a cellular communication module, a third generation (3G) mobile communication module, a fourth generation (4G) mobile communication module, a fourth generation long term evolution (4G LTE) communication module, and a fifth generation (5G) mobile communication module.

The memory 180 may store an operating system (OS) for controlling the general operations of the constituent elements of the robot 100 and commands or data related to the constituent elements of the robot 100. For example, the memory 180 may store a sentence database 181 storing sentences to be uttered by the robot 100 to the user, and a motion database 182 storing information on motions performed by the robot 100. The sentence database 181 may store tokens configuring a sentence and information on texts corresponding to sentences. In a case of a sentence to which the motion is allocated, the sentence may be matched to identification information of the motion and stored. The motion database 182 may store information on the motion. The information on the motion may include a rotation angle for each axis corresponding to each constituent element (e.g., head) of the robot 100. For example, the rotation angle may include angle corresponding to each of a roll axis, a pitch axis, and a yaw axis.

The memory 180 may store data necessary for modules for controlling the operation of the robot 100 to perform various operations. The modules for controlling the operation of the robot 100 may include a user command obtaining module 191, a sentence obtaining module 192, a motion obtaining module 193, a motion size control module 194, and an operation control module 195. Meanwhile, the memory 180 may be implemented as a non-volatile memory (e.g., a hard disk, a solid state drive (SSD), a or flash memory), and a volatile memory.

The processor 190 may be electrically connected to the memory 180 to control general functions and operations of the robot 100. The processor 190 may load data stored in the non-volatile memory for the modules 191 to 195 to perform various operations to the volatile memory. The loading herein may refer to an operation of loading and storing the data stored in the non-volatile memory to the volatile memory so that the processor 190 is able to access the data.

The user command obtaining module 191 may obtain various user commands. For example, the user command obtaining module 191 may obtain a touch input of the user for requesting for product explanation through the touch screen 120. Alternately, the user command obtaining module 191 may obtain a voice command for requesting for the explanation through the microphone 130.

The sentence obtaining module 192 may obtain a sentence to be uttered by the robot 100 to the user. A plurality of sentences that the robot 100 is able to utter to the user may be stored in the sentence database 181 in advance. The plurality of sentences may be grouped as a sentence set according to tasks of the robot 100. For example, a plurality of sentences corresponding to a task of explaining about a refrigerator may form one sentence set.

The sentence obtaining module 192 may obtain a predetermined sentence, when a trigger event is detected. For example, the trigger event may include an event in which the user is recognized within a predetermined distance from the robot 100. If the robot 100 is a robot for explaining about a specific product (e.g., a refrigerator), the sentence obtaining module 192 may obtain a sentence of explaining the specific product.

The sentence obtaining module 192 may obtain a sentence of responding to the user command based on the user command. For example, when the user command for requesting for the explanation of the refrigerator is obtained, the sentence obtaining module may obtain a plurality of sentences for explanation of the refrigerator based on the user command.

The sentence obtaining module 192 may obtain a sentence of responding to a user's speech by performing natural language processing (NLP) with respect to the user's speech. For this, the memory 180 may store a natural language processing module in advance. The natural processing module may include a speech recognition module, a natural language understanding module, a dialog management module, a natural language generation module, and a speech synthesis module.

The motion obtaining module 193 may obtain motions corresponding to the plurality of sentences obtained through the sentence obtaining module 192. The plurality of sentences obtained through the sentence obtaining module 192 may include a sentence to which a motion is allocated and a sentence to which a motion is not allocated. The motion obtaining module 193 may obtain a motion corresponding to the sentence to which the motion is not allocated. For example, the plurality of sentences may include a first sentence to which the motion is not allocate and a second sentence to which a second motion is allocated. The motion obtaining module 193 may obtain a first motion corresponding to the first sentence.

The motion obtaining module 193 may identify the first sentence to which the motion is not allocated. The motion obtaining module 193 may identify the second sentence to be uttered in a second time section adjacent to a first time section in which the first sentence is to be uttered. The motion obtaining module 193 may obtain a motion different from the second motion allocated to the second sentence among the plurality of motions stored in the motion database 182 as the first motion.

The motion obtaining module 193 may identify one or more motions having a similarity to the second motion less than a predetermined value (e.g., 0.45) among the plurality of motions stored in the motion database 182. The motion obtaining module 193 may select one of the one or more identified motions randomly and obtain the motion as the first motion.

The motion obtaining module 193 may identify one or more motions based on a similarity table stored in the memory 180. The similarity table may include similarities between the plurality of motions stored in the motion database 182. The motion obtaining module 193 may obtain similarities between the plurality of motions by comparing a plurality of histograms respectively corresponding to the plurality of motions stored in the motion database 182.

Meanwhile, there may be a plurality of sentences to be uttered in a time section adjacent to the first time section in which the first sentence is to be uttered, and a motion may be allocated to each of the plurality of sentences. For example, the second motion may be allocated to the second sentence to be uttered in the second time section that is a time section before the first time section, and a third motion may be allocated to a third sentence to be uttered in a third time section that is a time section after the first time section.

The motion obtaining module 193 may obtain a first similarity between each of the plurality of motions stored in the motion database 182 and the second motion, and a second similarity between each of the plurality of stored motions and the third motion. The motion obtaining module 193 may obtain a plurality of average values of the first similarity and the second similarity corresponding to each of the plurality of stored motions. The motion obtaining module 193 may identify one or more average values that is less than a predetermined value among the plurality of obtained average values. The motion obtaining module 193 may identify one or more motions corresponding to the one or more identified average values among the plurality of stored motions. The motion obtaining module 193 may obtain the first motion by randomly selecting one of the one or more identified motions.

Meanwhile, the motion obtaining module 193 may obtain the motion corresponding to only some sentences, instead of obtaining the motions corresponding to all sentences to which the motion is not allocated. For example, the motion obtaining module 193 may identify a sentence having a time taken for utterance that is longer than a predetermined value (e.g., 5 seconds) among the plurality of sentences to which the motion is not allocated, and obtain a motion corresponding to the identified sentence. In other words, the motion obtaining module 193 may not obtain a corresponding motion for a sentence having the time taken for utterance that is equal to or less than a predetermined value. This is because, if the sentence is extremely short, the robot 100 may not finish the motion while uttering the sentence.

The motion size control module 194 may adjust a size of the first motion based on a size of the first motion and a size of the second motion. The motion size control module 194 may determine whether to adjust the size of the first motion by comparing the size of the first motion and the size of the second motion. For example, if a ratio of the size of the first motion to the size of the second motion is greater than a threshold value (e.g., 0.5), the motion size control module 194 may adjust the size of the first motion. On the other hand, if the ratio of the size of the first motion to the size of the second motion is less or equal to a threshold value, the motion size control module 194 may maintain the size of the first motion.

The motion size control module 194 may obtain the size of the motion based on a rotation angle of the robot 100 or a constituent element (e.g., a head) of the robot 100 corresponding to the motion. The motion size control module 194 may obtain a maximum value of the size of the rotation angle for each axis as a size of the motion. For example, if a rotation range of the robot 100 corresponding to the first motion along the roll axis is -10 degrees to +10 degrees, a rotation range along the pitch axis is -30 degrees to +30 degrees, and a rotation range along the yaw axis is -5 degrees to +5 degrees, the size of the first motion may be 30 degrees. Accordingly, as the rotation angle of the robot 100 corresponding to the motion is great, the size of the motion may be great.

The motion size control module 194 may obtain a weight based on the size of the first motion and the size of the second motion and adjust the size of the first motion so that the size of the first motion is less than the size of the second motion based on the weight. For example, the motion size control module 194 may obtain a ratio of the size of the first motion to the size of the second motion as the weight. The motion size control module 194 may adjust the size of the first motion by multiplying the weight by the rotation angle of each axis corresponding to the first motion.

The operation control module 195 may control the operation of the robot 100 based on the first sentence and the first motion. The operation control module 195 may control the speaker 140 to output a first voice message corresponding to the first sentence. The operation control module 195 may control the driving unit 160 to perform the first motion while the first voice message is output. The operation control module 195 may synchronize the time during which the first voice message is output and time during which the first motion is performed. For example, the operation control module 195 may control a first voice message output timing and a first motion performing timing so that a time point when the first voice message starts to be output corresponds to a time point when the first motion starts to be performed. In addition, the operation control module 195 may control the first voice message output timing and the first motion performing timing so that a time point when the output of the first voice message is completed corresponds to a time point when the performing of the first motion is completed.

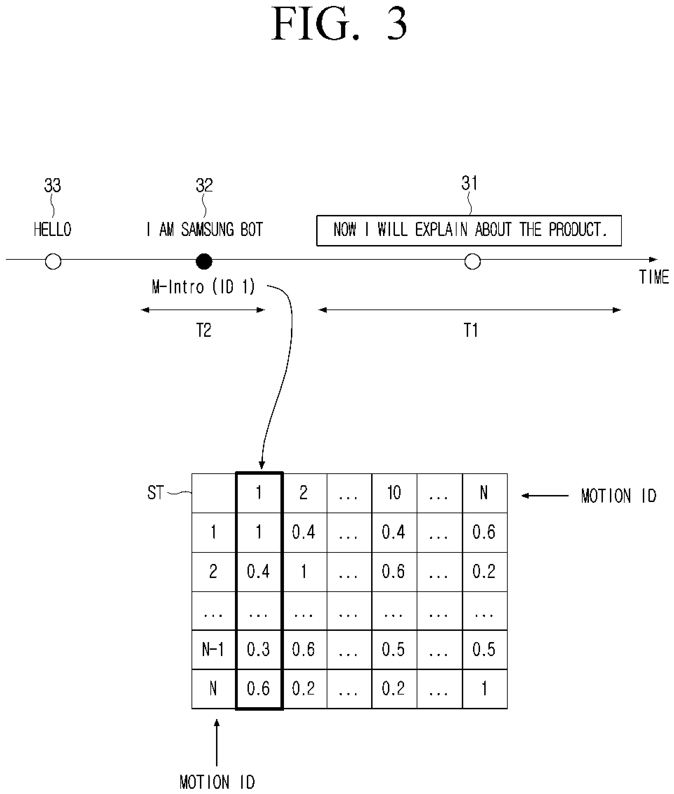

FIG. 3 is a diagram illustrating a method for obtaining a motion according to an embodiment of the disclosure.

Referring to FIG. 3, the robot 100 may identify a sentence to which the motion is not allocated among the plurality of sentences to be uttered to the user. The robot 100 may obtain a sentence having the time taken for utterance that is longer than the predetermined time among the identified sentences. For example, the robot 100 may identify a first sentence 31 and a third sentence 33 to which the motion is not allocated. The robot 100 may obtain the first sentence 31 having the time taken for utterance that is longer than the predetermined time.

The robot 100 may obtain the first sentence corresponding to the first sentence 31. For example, the robot 100 may identify a second sentence 32 uttered in a second time section T2 adjacent to a first time section T1 in which the first sentence 31 is to be uttered. The robot 100 may obtain identification information ID 1 of a second motion M-Intro allocated to the second sentence 32.

The robot 100 may obtain the first motion based on the identification information ID 1 of the second motion M-Intro and a similarity table ST. The similarity table ST may include similarities between predetermined motions that the robot 100 is able to perform. In the similarity table ST, a higher number implies a high similarity. For example, a similarity of 1 may imply that the motions are completely the same.

The robot 100 may identify one or more motions having a similarity to the second motion M-Intro that is less than a predetermined value (e.g., 0.5) based on the identification information ID-1 of the second motion M-Intro. The robot 100 may identify one of the one or more identified motions and obtain as the first motion. For example, the robot 100 may obtain one of the plurality of motions corresponding to a plurality of pieces of identification information, such as ID2, ID N-1, and the like as the first motion.

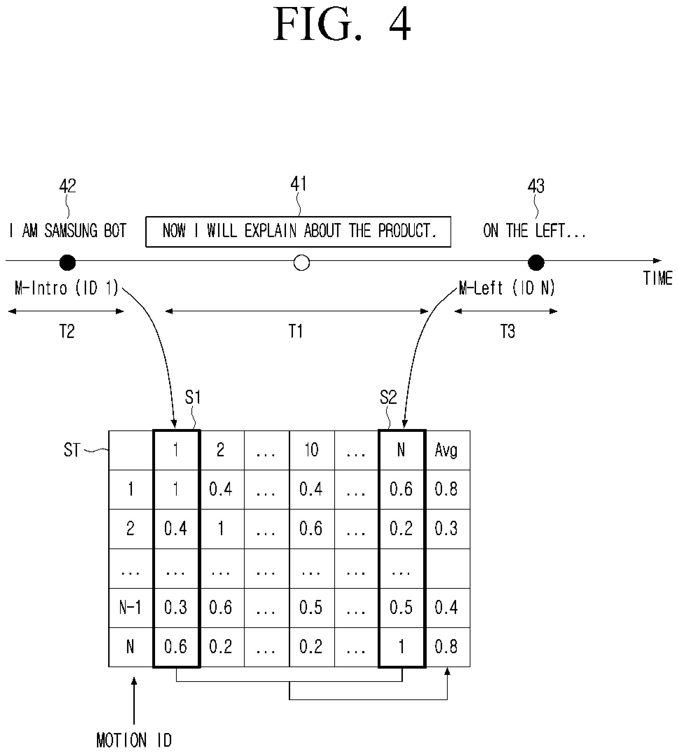

FIG. 4 is a diagram illustrating a method for obtaining a motion according to an embodiment of the disclosure.

Referring to FIG. 4, the robot 100 may obtain a first sentence 41, a second sentence 42, and a third sentence 43 to be uttered to the user. The first sentence 41, the second sentence 42, and the third sentence 43 may be uttered in the first time section T1, the second time section T2, and a third time section T3, respectively. The first time section T1 may be adjacent to the second time section T2 and the third time section T3. The second motion M-Intro may be allocated to the second sentence 42 and a third motion M-Left may be allocated to the third sentence 43.

The robot 100 may obtain the first motion corresponding to the first sentence 41 to which the motion is not allocated. The robot 100 may identify one or more motions based on the first similarity between the plurality of pre-stored motions and the second sentence 42 and the second similarity between the plurality of pre-stored motions and the third sentence 43. The similarity table ST may include similarities between the plurality of pre-stored motions. The robot 100 may obtain first similarities S1 between the plurality of motions and the second sentence 42 and second similarities S2 between the plurality of motions and the third sentence 43 corresponding to each of the plurality of motions. The robot 100 may obtain an average Avg of the first similarities S1 and the second similarities S2. The robot 100 may obtain one or more motions having an average value Avg less than a predetermined value (e.g., 0.5). The robot 100 may identify one of the one or more identified motions randomly and obtain as the first motion. For example, the robot 100 may obtain one of the plurality of motions corresponding to the plurality of pieces of identification information, such as ID 2, ID N-1, and the like as the first motion.

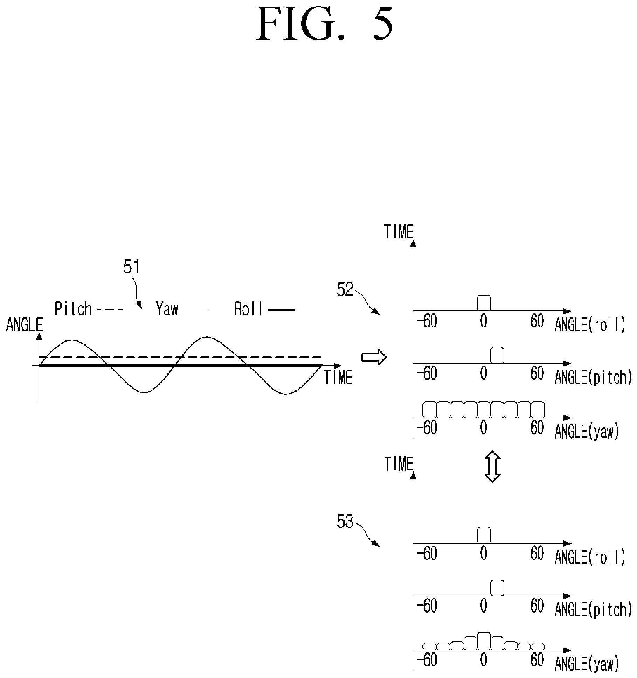

FIG. 5 is a diagram illustrating a method for determining similarity between motions according to an embodiment of the disclosure.

Referring to FIG. 5, the robot 100 may obtain information 51 for the first motion. The robot 100 may obtain a first histogram 52 corresponding to the information 51 for the first motion. The robot 100 may obtain the first histogram 52 corresponding to each of three axes (roll, pitch, and yaw). As described above, the robot 100 may obtain the histogram corresponding to each of the plurality of pre-stored motions.

The robot 100 may obtain the similarity between motions by comparing the histogram corresponding to each motion. For example, the robot 100 may obtain the similarity between the first motion and the second motion by comparing the first histogram 52 corresponding to the first motion and a second histogram 53 corresponding to the second motion. The robot 100 may calculate the similarity corresponding to each axis by comparing the histogram corresponding to each axis and obtain a final similarity based on an average of the similarities corresponding to the axes. For example, the robot 100 may obtain the first similarity between the roll axes of the first histogram 52 and the second histogram 53. The robot 100 may obtain the second similarity between pitch axes of the first histogram 52 and the second histogram 53. The robot 100 may obtain the third similarity between yaw axes of the first histogram 52 and the second histogram 53. The robot 100 may obtain the final similarity between the first motion and the second motion based on an average of the first similarity, the second similarity, and the third similarity. According to the method, the similarity table ST of FIGS. 3 and 4 may be obtained and stored in the memory 180.

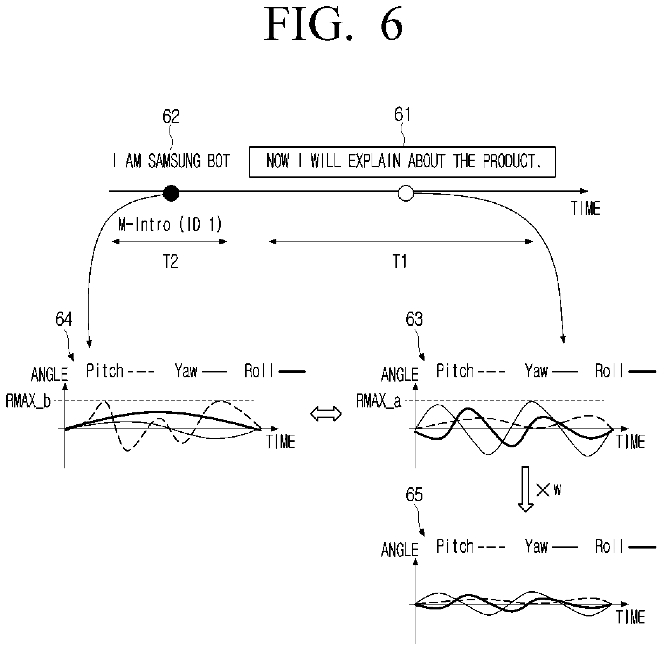

FIG. 6 is a diagram illustrating a method for controlling a motion size according to an embodiment of the disclosure.

Referring to FIG. 6, the robot 100 may obtain first motion information 63 corresponding to a first sentence 61 and second motion information 64 corresponding to a second sentence 62. Each motion information may include rotation angles of the robot 100 or the elements of the robot 100 corresponding to each motion.

The robot 100 may determine whether to adjust the size of the first motion based on the first motion information 63 and the second motion information 64. The robot 100 may obtain a first maximum value RMAX-a of the size of the rotation angles corresponding to the first motion based on the first motion information 63. The robot 100 may obtain a second maximum value RMAX-b of the size of the rotation angles corresponding to the second motion based on the second motion information 64. If a ratio of the first maximum value RMAX-a to the second maximum value RMAX-b (that is, RMAX-a/RMAX-b) is greater than a threshold value (e.g., 0.5), the robot 100 may adjust the size of the first motion. If the ratio of the first maximum value RMAX-a to the second maximum value RMAX-b is less or equal to the threshold value (e.g., 0.5), the robot 100 may adjust the size of the first motion.

The robot 100 may adjust the size of the first motion based on the size of the first motion and the size of the second motion. For example, the robot 100 may obtain the ratio of the first maximum value RMAX-a to the second maximum value RMAX-b (that is, RMAX-a/RMAX-b) as a weight a. The robot 100 may adjust the size of the first motion based on the first motion information 63 and the weight w. The robot 100 may obtain third motion information 65 by multiplying the weight w by the rotation angles corresponding to the first motion. The third motion information may correspond to the first sentence 61.

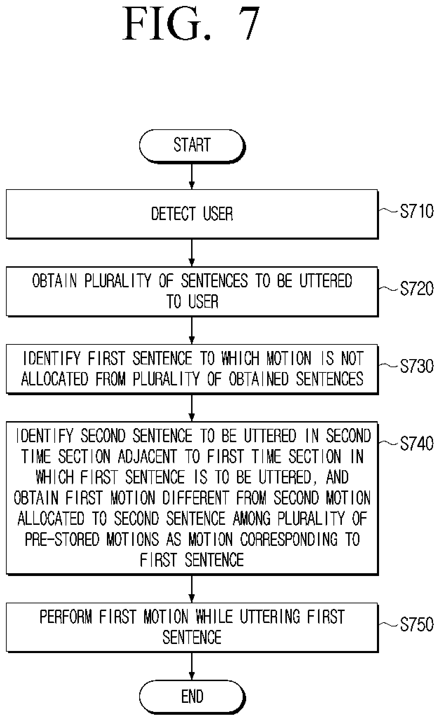

FIG. 7 is a flowchart illustrating a method for controlling a robot according to an embodiment of the disclosure.

Referring to FIG. 7, the robot 100 may detect the user at operation S710. For example, the robot 100 may recognize the user by analyzing a captured image obtained through the camera.

The robot 100 may obtain a plurality of sentences to be uttered to the user at operation S720. The robot 100 may obtain a plurality of sentences stored in the memory 180 in advance. The robot 100 may obtain the plurality of sentences based on a user command. For example, the robot 100 may obtain the plurality of sentences for explaining about a refrigerator based on a user command ("Please explain about this refrigerator").

The robot 100 may identify a first sentence to which a motion to be performed while the robot 100 utters is not allocated among the plurality of obtained sentences at operation S730. For example, the robot 100 may identify the first sentence 11 of FIG. 1.

The robot 100 may identify a second sentence to be uttered in a second time section adjacent to a first time section in which the first sentence is to be uttered, and obtain a first motion different from a second motion allocated to the second sentence among the plurality of pre-stored motions as a motion corresponding to the first sentence at operation S740. The robot 100 may identify one or more motions having a similarity to the second motion lower than a predetermined value among the plurality of pre-stored motions. The robot 100 may obtain similarities between the plurality of pre-stored motions and the second motion by comparing histograms corresponding to the plurality of pre-stored motions and a histogram corresponding to the second motion. The robot 100 may identify one or more motions based on a similarity table including similarities between the plurality of pre-stored motions.

Meanwhile, the time section adjacent to the first time section may be in plural. For example, the first time section may be adjacent to the second time section and a third time section. The robot 100 may identify a third motion allocated to a third sentence to be uttered in the third time section. The robot 100 may obtain a first similarity between each of the plurality of pre-stored motions and the second motion and a second similarity between each of the plurality of pre-stored motions and the third motion. The robot 100 may obtain a plurality of average values of the first similarity and the second similarity corresponding to each of the plurality of pre-stored motions. The robot 100 may identify one or more average values less than a predetermined value among the plurality of average values and identify one or more motions corresponding to the one or more identified average values among the plurality of pre-stored motions.

The robot 100 may select one of the one or more identified motions randomly and obtain the motion as the first motion. The robot 100 may perform the first motion while uttering the first sentence at operation S750.

The robot 100 may adjust the size of the first motion. The robot 100 may obtain the size of the second motion based on the information on the second motion. If a ratio of the size of the first motion to the size of the second motion is greater than a threshold value, the robot 100 may adjust the size of the first motion based on the size of the first motion and the size of the second motion. The robot 100 may calculate the weight based on the ratio of the size of the first motion to the size of the second motion. The robot 100 may adjust the size of the first motion based on the weight so that the size of the first motion is less than the size of the second motion. If the ratio of the size of the first motion to the size of the second motion is less or equal to the threshold value, the robot 100 may maintain the size of the first motion.

Meanwhile, when a trigger event is detected or a user command is obtained, the robot 100 may obtain a plurality of sentence sets at once or may also generate sentences in real time while performing interaction with the user.

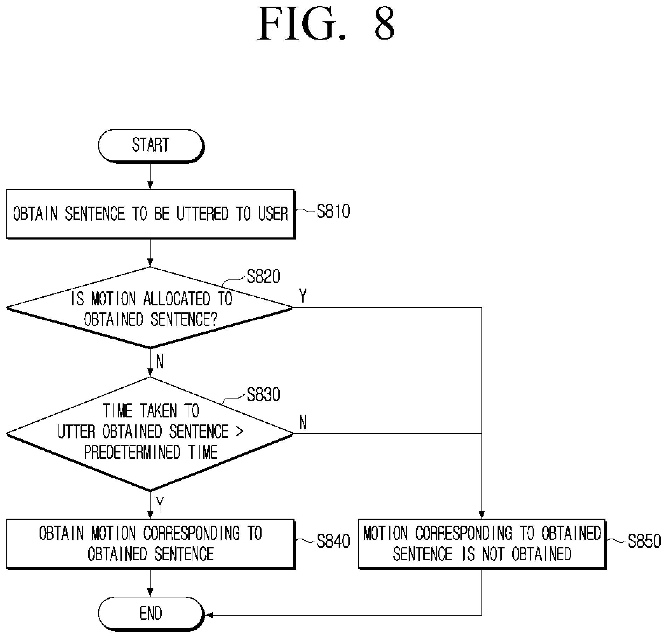

FIG. 8 is a flowchart illustrating a method for controlling a robot according to an embodiment of the disclosure.

Referring to FIG. 8, the robot 100 may obtain a sentence to be uttered to a user at operation S810. When a trigger event is detected or a user command is obtained, the robot 100 may obtain the sentence to be uttered to the user. The robot 100 may obtain a sentence pre-stored in the memory 180 based on the trigger event or the user command. Alternatively, the robot 100 may generate the sentence to be uttered to the user based on the trigger event or the user command. For example, if a user voice command ("Where is the bathroom?") is obtained, a response sentence ("Please go straight this way 20 m").

The robot 100 may identify whether a motion is allocated to the obtained sentence at operation S820. For example, the sentence to which the motion is allocated may be matched to the identification information of the allocated motion and stored in the memory 180. The robot 100 may identify whether there is identification information of the stored motion that is matched to the obtained sentence, and determine whether the motion is allocated to the obtained sentence. When the robot 100 generates the sentence, the robot 100 may identify whether the generated sentence is stored in the memory 180. When the generated sentence is stored in the memory 180, the robot 100 may identify whether there is identification information of the stored motion that is matched to the obtained sentence, and determine whether the motion is allocated to the obtained sentence.

If the motion is allocated to the obtained sentence at operation S820-Y, the robot 100 may not obtain a motion corresponding to the obtained sentence at operation S850.

If the motion is not allocated to the obtained sentence at operation S820-N, the robot 100 may identify whether the time taken to utter the obtained sentence is greater than the predetermined time at operation S830. The robot 100 may obtain a voice message corresponding to the obtained sentence based on a text-to-speech (TTS) module. The robot 100 may determine whether a length of the voice message is longer than the predetermined time.

If the time taken to utter the obtained sentence is longer than the predetermined time at operation S830-Y, the robot 100 may obtain the motion corresponding to the obtained sentence at operation S840. The robot 100 may identify the motion corresponding to the sentence uttered in the time section adjacent to the time section in which the obtained sentence is to be uttered, and obtain a motion having a similarity to the identified motion less than a predetermined value.

If the time taken to utter the obtained sentence is equal to or less than the predetermined time at operation S830-N, the robot 100 may not obtain the motion corresponding to the obtained sentence at operation S850. In a case where the robot 100 utters a voice message corresponding to a plurality of sentences continuously, if the robot 100 performs a motion corresponding to the voice message having a length shorter than the predetermined time, an unnatural motion of the robot 100 may be shown. In order to prevent this, the robot 100 may not obtain the motion corresponding to the obtained sentence, if the time taken to utter the obtained sentence is equal to or less than the predetermined time. For example, if a length of "Hello" (1 second) of FIG. 1 is equal to or less than the predetermined time (5 seconds), the robot 100 may not perform the motion while uttering "Hello".

Meanwhile, computer instructions for executing processing operations according to the embodiments of the disclosure descried above may be stored in a non-transitory computer-readable medium. When the computer instructions stored in such a non-transitory computer-readable medium are executed by the processor, the computer instructions may enable a specific machine to execute the processing operations according to the embodiments described above.

The non-transitory computer-readable medium is not a medium storing data for a short period of time, such as a register, a cache, or a memory, but may refer to a medium that semi-permanently stores data and is readable by a machine. Specific examples of the non-transitory computer-readable medium may include a compact disc (CD), a digital video disc (DVD), a hard disk drive, a Blu-ray disc, a universal serial bus (USB), a memory card, and a read only memory (ROM).

While the disclosure has been shown and described with reference to various embodiments thereof, it will be understood by those skilled in the art that various changes in form and details may be made therein without departing from the scope of the disclosure as defined by the appended claims.

## Claims

1. A robot comprising:
a camera;
a speaker;
a driving unit;
a memory storing at least one instruction; and
a processor,
wherein the processor is configured to:
detect a user based on an image obtained through the camera,
obtain a plurality of sentences to be uttered by the robot to the user,
identify a first sentence to which a motion to be performed while the robot utters is not allocated among the plurality of sentences,
identify a second sentence to be uttered in a second time section adjacent to a first time section in which the first sentence is to be uttered,
obtain a first motion different from a second motion allocated to the second sentence among a plurality of motions pre-stored in the memory as a motion corresponding to the first sentence, and
control the speaker to output a voice corresponding to the first sentence and control the driving unit to perform the first motion while the voice is output.

2. The robot of claim 1, wherein the processor is further configured to:
identify one or more motions having a similarity to the second motion less than a predetermined value among the plurality of pre-stored motions, and
identify one of the one or more motions randomly and obtain the motion as the first motion.

3. The robot of claim 2, wherein the processor is further configured to obtain similarities between the plurality of pre-stored motions and the second motion by comparing histograms corresponding to the plurality of pre-stored motions and a histogram corresponding to the second motion.

4. The robot of claim 2,
wherein the memory stores a similarity table including similarities between the plurality of pre-stored motions including the second motion, and
wherein the processor is further configured to obtain the first motion based on the similarity table.

5. The robot of claim 1, wherein the processor is further configured to:
identify a third motion allocated to a third sentence to be uttered in a third time section that is adjacent to the first time section and different from the second time section,
obtain first similarities between the plurality of pre-stored motions and the second motion and obtain second similarities between the plurality of pre-stored motions and the third motion,
obtain a plurality of average values of the first similarities and the second similarities corresponding to the plurality of pre-stored motions,
identify one or more average values less than a predetermined value among the plurality of average values and identify one or more motions corresponding to the one or more average values among the plurality of pre-stored motions, and
identify one of the one or more motions randomly and obtain the motion as the first motion.

6. The robot of claim 1, wherein the processor is further configured to:
obtain a size of the second motion based on information on the second motion,
based on a ratio of a size of the first motion to the size of the second motion being greater than a threshold value, adjust the size of the first motion based on the size of the first motion and the size of the second motion, and
based on the ratio of the size of the first motion to the size of the second motion being less or equal to the threshold value, maintain the size of the first motion.

7. The robot of claim 6, wherein the processor is further configured to:
calculate a weight based on the ratio of the size of the first motion to the size of the second motion, and
adjust the size of the first motion based on the weight so that the size of the first motion is less than the size of the second motion.

8. A method for controlling a robot, the method comprising:
detecting a user;
obtaining a plurality of sentences to be uttered by the robot to the detected user;
identifying a first sentence to which a motion to be performed while the robot utters is not allocated among the plurality of sentences;
identifying a second sentence to be uttered in a second time section adjacent to a first time section in which the first sentence is to be uttered, and obtaining a first motion different from a second motion allocated to the second sentence among a plurality of pre-stored motions as a motion corresponding to the first sentence; and
performing the first motion while uttering the first sentence.

9. The method of claim 8, wherein the obtaining of the first motion comprises:
identifying one or more motions having a similarity to the second motion less than a predetermined value among the plurality of pre-stored motions; and
identifying one of the one or more motions randomly and obtaining the motion as the first motion.

10. The method of claim 9, wherein the identifying of the one or more motions comprises obtaining similarities between the plurality of pre-stored motions and the second motion by comparing histograms corresponding to the plurality of pre-stored motions and a histogram corresponding to the second motion.

11. The method of claim 9,
wherein the robot stores a similarity table including similarities between the plurality of pre-stored motions including the second motion, and
wherein the obtaining of the first motion comprises obtaining the first motion based on the similarity table.

12. The method of claim 8, wherein the obtaining of the first motion comprises:
identifying a third motion allocated to a third sentence to be uttered in a third time section that is adjacent to the first time section and different from the second time section;
obtaining first similarities between the plurality of pre-stored motions and the second motion and obtaining second similarities between the plurality of pre-stored motions and the third motion;
obtaining a plurality of average values of the first similarities and the second similarities corresponding to the plurality of pre-stored motions;
identifying one or more average values less than a predetermined value among the plurality of average values and identifying one or more motions corresponding to the one or more average values among the plurality of pre-stored motions; and
identifying one of the one or more motions randomly and obtaining the motion as the first motion.

13. The method of claim 8, further comprising:
obtaining a size of the second motion based on information on the second motion;
based on a ratio of a size of the first motion to the size of the second motion being greater than a threshold value, adjusting the size of the first motion based on the size of the first motion and the size of the second motion; and
based on the ratio of the size of the first motion to the size of the second motion being less or equal to the threshold value, maintaining the size of the first motion.

14. The method of claim 13, wherein the adjusting of the size of the first motion comprises:
calculating a weight based on the ratio of the size of the first motion to the size of the second motion; and
adjusting the size of the first motion based on the weight so that the size of the first motion is less than the size of the second motion.

15. At least one non-transitory computer-readable recording medium on which a program for executing the method of claim 8 on a computer is recorded.

## Patentansprüche

1. Roboter, umfassend:
eine Kamera;
einen Lautsprecher,
eine Antriebseinheit;
einen Speicher, der mindestens eine Anweisung speichert; und
einen Prozessor,
wobei der Prozessor konfiguriert ist, um
einen Benutzer basierend auf einem von der Kamera erhaltenen Bild zu erkennen,
eine Vielzahl von Sätzen zu erhalten, die vom Roboter an den Benutzer gerichtet werden sollen,
einen ersten Satz, dem eine Bewegung, die ausgeführt werden soll, während der Roboter spricht, nicht zugeordnet ist, aus der Vielzahl von Sätzen zu identifizieren,
einen zweiten Satz zu identifizieren, der in einem zweiten Zeitabschnitt angrenzend an einen ersten Zeitabschnitt, in dem der erste Satz gesprochen werden soll, gesprochen werden soll,
eine erste Bewegung, die sich von einer dem zweiten Satz zugeordneten zweiten Bewegung unterscheidet, aus einer Vielzahl von im Speicher vorgespeicherten Bewegungen als eine dem ersten Satz entsprechende Bewegung zu erhalten, und
den Lautsprecher so zu steuern, dass er eine dem ersten Satz entsprechende Stimme ausgibt, und die Antriebseinheit so zu steuern, dass sie die erste Bewegung ausführt, während die Stimme ausgegeben wird.

2. Roboter nach Anspruch 1, wobei der Prozessor ferner konfiguriert ist zum:
Identifizieren einer oder mehrerer Bewegungen mit einer Ähnlichkeit zu der zweiten Bewegung, die kleiner als ein vorbestimmter Wert ist, aus der Vielzahl von vorgespeicherten Bewegungen, und
willkürliches Identifizieren von einer der einen oder mehreren Bewegungen und Erhalten der Bewegung als erste Bewegung.

3. Roboter nach Anspruch 2, wobei der Prozessor ferner konfiguriert ist, um Ähnlichkeiten zwischen der Vielzahl von vorgespeicherten Bewegungen und der zweiten Bewegung zu erhalten, indem Histogramme, die der Vielzahl von vorgespeicherten Bewegungen entsprechen, und ein Histogramm, das der zweiten Bewegung entspricht, verglichen werden.

4. Roboter nach Anspruch 2,
wobei der Speicher eine Ähnlichkeitstabelle speichert, die Ähnlichkeiten zwischen der Vielzahl von vorgespeicherten Bewegungen, einschließlich der zweiten Bewegung, enthält, und
wobei der Prozessor ferner konfiguriert ist, um die erste Bewegung basierend auf der Ähnlichkeitstabelle zu erhalten.

5. Roboter nach Anspruch 1, wobei der Prozessor ferner konfiguriert ist zum:
Identifizieren einer dritten Bewegung, die einem dritten Satz zugeordnet ist, der in einem dritten Zeitabschnitt gesprochen werden soll, der an den ersten Zeitabschnitt angrenzt und sich vom zweiten Zeitabschnitt unterscheidet,
Erhalten erster Ähnlichkeiten zwischen der Vielzahl von vorgespeicherten Bewegungen und der zweiten Bewegung und Erhalten zweiter Ähnlichkeiten zwischen der Vielzahl von vorgespeicherten Bewegungen und der dritten Bewegung,
Erhalten einer Vielzahl von Durchschnittswerten der ersten Ähnlichkeiten und der zweiten Ähnlichkeiten entsprechend der Vielzahl von vorgespeicherten Bewegungen,
Identifizieren eines oder mehrerer Durchschnittswerte, die unter einem vorbestimmten Wert liegen, aus der Vielzahl von Durchschnittswerten und Identifizieren einer oder mehrerer Bewegungen, die dem einen oder den mehreren Durchschnittswerten entsprechen, aus der Vielzahl von vorgespeicherten Bewegungen, und
willkürliches Identifizieren von einer der einen oder mehreren Bewegungen und Erhalten der Bewegung als erste Bewegung.

6. Roboter nach Anspruch 1, wobei der Prozessor ferner konfiguriert ist, um:
eine Größe der zweiten Bewegung basierend auf Informationen über die zweite Bewegung zu erhalten,
basierend darauf, dass ein Verhältnis zwischen einer Größe der ersten Bewegung und der Größe der zweiten Bewegung größer als ein Schwellenwert ist, die Größe der ersten Bewegung basierend auf der Größe der ersten Bewegung und der Größe der zweiten Bewegung anzupassen, und
basierend darauf, dass das Verhältnis zwischen der Größe der ersten Bewegung und der Größe der zweiten Bewegung kleiner oder gleich dem Schwellenwert ist, die Größe der ersten Bewegung beibehalten.

7. Roboter nach Anspruch 6, wobei der Prozessor ferner konfiguriert ist zum:
Berechnen einer Gewichtung basierend auf dem Verhältnis zwischen der Größe der ersten Bewegung und der Größe der zweiten Bewegung, und
Anpassen der Größe der ersten Bewegung basierend auf der Gewichtung, so dass die Größe der ersten Bewegung kleiner ist als die Größe der zweiten Bewegung.

8. Verfahren zum Steuern eines Roboters, wobei das Verfahren umfasst:
Erkennen eines Benutzers;
Erhalten einer Vielzahl von Sätzen, die vom Roboter an den erkannten Benutzer gerichtet werden sollen;
Identifizieren eines ersten Satzes, dem eine Bewegung, die ausgeführt werden soll, während der Roboter spricht, nicht zugeordnet ist, unter der Vielzahl von Sätzen;
Identifizieren eines zweiten Satzes, der in einem zweiten Zeitabschnitt gesprochen werden soll, der an einen ersten Zeitabschnitt angrenzt, in dem der erste Satz gesprochen werden soll, und Erhalten einer ersten Bewegung, die sich von einer zweiten Bewegung unterscheidet, die dem zweiten Satz zugeordnet ist, aus einer Vielzahl von vorgespeicherten Bewegungen als eine dem ersten Satz entsprechende Bewegung; und
Ausführen der ersten Bewegung während des Sprechens des ersten Satzes.

9. Verfahren nach Anspruch 8, wobei das Erhalten der ersten Bewegung umfasst:
Identifizieren einer oder mehrerer Bewegungen mit einer Ähnlichkeit zu der zweiten Bewegung, die kleiner als ein vorbestimmter Wert ist, aus der Vielzahl von vorgespeicherten Bewegungen; und
willkürliches Identifizieren von einer der einen oder mehreren Bewegungen und Erhalten der Bewegung als erste Bewegung.

10. Verfahren nach Anspruch 9, wobei das Identifizieren der einen oder mehreren Bewegungen das Erhalten von Ähnlichkeiten zwischen der Vielzahl von vorgespeicherten Bewegungen und der zweiten Bewegung durch Vergleichen von Histogrammen, die der Vielzahl von vorgespeicherten Bewegungen entsprechen, und einem Histogramm, das der zweiten Bewegung entspricht, umfasst.

11. Verfahren nach Anspruch 9,
wobei der Roboter eine Ähnlichkeitstabelle speichert, die Ähnlichkeiten zwischen der Vielzahl von vorgespeicherten Bewegungen, einschließlich der zweiten Bewegung, enthält, und
wobei das Erhalten der ersten Bewegung das Erhalten der ersten Bewegung basierend auf der Ähnlichkeitstabelle umfasst.

12. Verfahren nach Anspruch 8, wobei das Erhalten der ersten Bewegung umfasst:
Identifizieren einer dritten Bewegung, die einem dritten Satz zugeordnet ist, der in einem dritten Zeitabschnitt gesprochen werden soll, der an den ersten Zeitabschnitt angrenzt und sich vom zweiten Zeitabschnitt unterscheidet,
Erhalten erster Ähnlichkeiten zwischen der Vielzahl von vorgespeicherten Bewegungen und der zweiten Bewegung und Erhalten zweiter Ähnlichkeiten zwischen der Vielzahl von vorgespeicherten Bewegungen und der dritten Bewegung;
Erhalten einer Vielzahl von Durchschnittswerten der ersten Ähnlichkeiten und der zweiten Ähnlichkeiten entsprechend der Vielzahl von vorgespeicherten Bewegungen;
Identifizieren eines oder mehrerer Durchschnittswerte, die unter einem vorbestimmten Wert liegen, aus der Vielzahl von Durchschnittswerten und Identifizieren einer oder mehrerer Bewegungen, die dem einen oder den mehreren Durchschnittswerten entsprechen, aus der Vielzahl von vorgespeicherten Bewegungen; und
willkürliches Identifizieren von einer der einen oder mehreren Bewegungen und Erhalten der Bewegung als erste Bewegung.

13. Verfahren nach Anspruch 8, ferner umfassend:
Erhalten der Größe der zweiten Bewegung basierend auf Informationen über die zweite Bewegung;
basierend darauf, dass ein Verhältnis zwischen einer Größe der ersten Bewegung und der Größe der zweiten Bewegung größer als ein Schwellenwert ist, Anpassen der Größe der ersten Bewegung basierend auf der Größe der ersten Bewegung und der Größe der zweiten Bewegung; und
basierend darauf, dass das Verhältnis zwischen der Größe der ersten Bewegung und der Größe der zweiten Bewegung kleiner oder gleich dem Schwellenwert ist, Beibehalten der Größe der ersten Bewegung.

14. Verfahren nach Anspruch 13, wobei das Anpassen der Größe der ersten Bewegung umfasst:
Berechnen einer Gewichtung basierend auf dem Verhältnis zwischen der Größe der ersten Bewegung und der Größe der zweiten Bewegung; und
Anpassen der Größe der ersten Bewegung basierend auf der Gewichtung, so dass die Größe der ersten Bewegung kleiner ist als die Größe der zweiten Bewegung.

15. Zumindest ein nicht-flüchtiges computerlesbares Aufzeichnungsmedium, auf dem ein Programm zum Durchführen des Verfahrens nach Anspruch 8 auf einem Computer aufgezeichnet wird.

## Revendications

1. Robot, comprenant :
une caméra ;
un haut-parleur,
une unité d'entraînement ;
une mémoire stockant au moins une instruction ; et
un processeur ;
dans lequel le processeur est configuré pour :
détecter un utilisateur en se basant sur une image obtenue par la caméra,
obtenir une pluralité de phrases à prononcer par le robot à l'intention de l'utilisateur,
identifier une première phrase à laquelle un mouvement à effectuer pendant que le robot prononce n'est pas attribué parmi la pluralité de phrases,
identifier une deuxième phrase à prononcer dans une deuxième section temporelle adjacente à une première section temporelle dans laquelle la première phrase doit être prononcée,
obtenir un premier mouvement différent d'un deuxième mouvement attribué à la deuxième phrase parmi une pluralité de mouvements pré-enregistrés dans la mémoire en tant que mouvement correspondant à la première phrase, et
commander le haut-parleur pour qu'il émette une voix correspondant à la première phrase et commander l'unité d'entraînement pour qu'elle effectue le premier mouvement pendant que la voix est émise.

2. Robot de la revendication 1, dans lequel le processeur est en outre configuré pour :
identifier un ou plusieurs mouvements dont la similarité avec le deuxième mouvement est inférieure à une valeur prédéterminée parmi la pluralité de mouvements pré-enregistrés, et
identifier de manière aléatoire l'un des un ou plusieurs mouvements et obtenir le mouvement en tant que premier mouvement.

3. Robot de la revendication 2, dans lequel le processeur est en outre configuré pour obtenir des similarités entre la pluralité de mouvements pré-enregistrés et le deuxième mouvement en comparant des histogrammes correspondant à la pluralité de mouvements pré-enregistrés et un histogramme correspondant au deuxième mouvement.

4. Robot de la revendication 2,
dans lequel la mémoire stocke une table de similarités comprenant des similarités entre la pluralité de mouvements pré-enregistrés comprenant le deuxième mouvement, et
dans lequel le processeur est en outre configuré pour obtenir le premier mouvement en se basant sur la table de similarités.

5. Robot de la revendication 1, dans lequel le processeur est en outre configuré pour :
identifier un troisième mouvement attribué à une troisième phrase à prononcer dans une troisième section temporelle adjacente à la première section temporelle et différente de la deuxième section temporelle,
obtenir des premières similarités entre la pluralité de mouvements pré-enregistrés et le deuxième mouvement et obtenir des deuxièmes similarités entre la pluralité de mouvements pré-enregistrés et le troisième mouvement,
obtenir une pluralité de valeurs moyennes des premières similarités et des deuxièmes similarités correspondant à la pluralité de mouvements pré-enregistrés,
identifier une ou plusieurs valeurs moyennes inférieures à une valeur prédéterminée parmi la pluralité de valeurs moyennes et identifier un ou plusieurs mouvements correspondant à l'une ou plusieurs valeurs moyennes parmi la pluralité de mouvements pré-enregistrés, et
identifier de manière aléatoire l'une des un ou plusieurs mouvements et obtenir le mouvement en tant que premier mouvement.

6. Robot de la revendication 1, dans lequel le processeur est en outre configuré pour :
obtenir une taille du deuxième mouvement en se basant sur les informations sur le deuxième mouvement,
en se basant sur un rapport entre la taille du premier mouvement et la taille du deuxième mouvement supérieur à une valeur seuil, ajuster la taille du premier mouvement en fonction de la taille du premier mouvement et de la taille du deuxième mouvement, et
en se basant sur le fait que le rapport entre la taille du premier mouvement et la taille du deuxième mouvement est inférieur ou égal à la valeur seuil, maintenir la taille du premier mouvement.

7. Robot de la revendication 6, dans lequel le processeur est en outre configuré pour :
calculer un poids sur la base du rapport entre la taille du premier mouvement et la taille du deuxième mouvement, et
ajuster la taille du premier mouvement en se basant sur le poids de manière à ce que la taille du premier mouvement soit inférieure à la taille du deuxième mouvement.

8. Procédé de commande d'un robot, le procédé comprenant :
détecter un utilisateur ;
obtenir une pluralité de phrases à prononcer par le robot à l'intention de l'utilisateur détecté ;
identifier une première phrase à laquelle un mouvement à effectuer pendant que le robot prononce n'est pas attribué parmi la pluralité de phrases ;
identifier une deuxième phrase à prononcer dans une deuxième section temporelle adjacente à une première section temporelle dans laquelle la première phrase doit être prononcée, et obtenir un premier mouvement différent d'un deuxième mouvement attribué à la deuxième phrase parmi une pluralité de mouvements pré-enregistrés en tant que mouvement correspondant à la première phrase ; et
effectuer le premier mouvement tout en prononçant la première phrase.

9. Procédé de la revendication 8, dans lequel obtenir le premier mouvement comprend :
identifier un ou plusieurs mouvements dont la similarité avec le deuxième mouvement est inférieure à une valeur prédéterminée parmi la pluralité de mouvements pré-enregistrés ; et
identifier de manière aléatoire l'un des un ou plusieurs mouvements et obtenir le mouvement en tant que premier mouvement.

10. Procédé de la revendication 9, dans lequel l'identification des un ou plusieurs mouvements comprend l'obtention de similarités entre la pluralité de mouvements pré-enregistrés et le deuxième mouvement en comparant des histogrammes correspondant à la pluralité de mouvements pré-enregistrés et un histogramme correspondant au deuxième mouvement.

11. Procédé de la revendication 9,
dans lequel le robot stocke une table de similarités comprenant des similarités entre la pluralité de mouvements pré-enregistrés comprenant le deuxième mouvement, et
dans lequel l'obtention du premier mouvement comprend l'obtention du premier mouvement en se basant sur la table de similarités.

12. Procédé de la revendication 8, dans lequel obtenir le premier mouvement comprend :
identifier un troisième mouvement attribué à une troisième phrase à prononcer dans une troisième section temporelle adjacente à la première section temporelle et différente de la deuxième section temporelle;
obtenir des premières similarités entre la pluralité de mouvements pré-enregistrés et le deuxième mouvement et obtenir des deuxièmes similarités entre la pluralité de mouvements pré-enregistrés et le troisième mouvement ;
obtenir une pluralité de valeurs moyennes des premières similarités et des deuxièmes similarités correspondant à la pluralité de mouvements pré-enregistrés ;
identifier une ou plusieurs valeurs moyennes inférieures à une valeur prédéterminée parmi la pluralité de valeurs moyennes et identifier un ou plusieurs mouvements correspondant à l'une ou plusieurs valeurs moyennes parmi la pluralité de mouvements pré-enregistrés ; et
identifier de manière aléatoire l'un des un ou plusieurs mouvements et obtenir le mouvement en tant que premier mouvement.

13. Procédé de la revendication 8, comprenant en outre :
obtenir une taille du deuxième mouvement en se basant sur les informations sur le deuxième mouvement ;
en se basant sur un rapport entre la taille du premier mouvement et la taille du deuxième mouvement supérieur à une valeur seuil, ajuster la taille du premier mouvement en fonction de la taille du premier mouvement et de la taille du deuxième mouvement ; et
en se basant sur le fait que le rapport entre la taille du premier mouvement et la taille du deuxième mouvement est inférieur ou égal à la valeur seuil, maintenir la taille du premier mouvement.

14. Procédé de la revendication 13, dans lequel ajuster la taille du premier mouvement comprend :
calculer un poids sur la base du rapport entre la taille du premier mouvement et la taille du deuxième mouvement, et
ajuster la taille du premier mouvement en se basant sur le poids de manière à ce que la taille du premier mouvement soit inférieure à la taille du deuxième mouvement.

15. Au moins un support d'enregistrement lisible par ordinateur non-transitoire sur lequel est enregistré un programme permettant d'exécuter le procédé de la revendication 8 sur un ordinateur.
